# EUROPEAN PATENT SPECIFICATION

(11) **EP 0 290 714 B1**
(45) Date of publication and mention of the grant of the patent: **14.04.1993**
(21) Application number: 88100208.3
(22) Date of filing: 09.01.1988
(51) Int. Cl.: A23L 3/02, A23L 3/00, A23L 3/36

(54) **Cooling chamber with an overhead water sprinkler, particularly for food sterilization drums**
Kühlungszimmer mit oberirdischem Wassersprengapparat, insbesondere für Lebensmittelsterilisationstrommeln
Chambre de refroidissement avec aspersion d'eau au plafond, notamment pour tambour de stérilisation d'aliments

(30) Priority: 16.01.1987 IT 331587
(43) Date of publication of application: 17.11.1988
(73) Proprietor: TEC.AL S.n.c. di Fabbri Roberto & Montacuti Gianfranco, I-47023 Torre del Moro di Cesena Forli' (IT)
(72) Inventor: Fabbri, Roberto, I-47023 Cesena (Forli) (IT); Montacuti, Gianfranco, I-47100 Forli (IT)
(74) Representative: Modiano, Guido, Dr.-Ing.

(56) References cited:
- US-A- 4 342 726

## Description

The present invention relates to a cooling chamber with overhead water sprinkler, particularly for sterile food drums.

The hot-filling and sterilization of drums containing food products is known, and so is their cooling by water sprinkling to prevent any worsening of the organoleptic characteristics of the products because of an improper cooling.

In order to increase the cooling speed it is necessary to move the drums, namely to rotate them with the possibility of reversing the direction of their rotation and with a speed which depend on the type and on the viscosity of the content in order to move the innermost part of the products outwards, that is to say into cooling position.

Chambers currently adopted have different cooling positions and a plurality of accesses, one for each position, for loading and unloading the product, by means of various devices. This entails quite a complex operation for loading and unloading the drums and thus higher costs.

US-4.342.726 discloses a machine for sterilizing foodstuffs in cans, comprising a roller system for moving the cans in an alternated, or pilgrim, step, and including a sprinkler system.

However, this machine is suitable for processing only small containers, such as cans.

The aim of the present invention is to eliminate the above described disadvantages by providing a cooling chamber in which the loading and unloading operations are automated with lower costs of installation and operation.

An object of the present invention is to achieve the above described aim with a simple structure, relatively easy to manufacture in practice, safe in use and effective in operation.

This aim, as well as this object, are achieved by a cooling chamber with overhead water sprinkler, particularly for sterile food drums, as claimed in claim 1.

Further characteristics and advantages of the invention will become apparent from the detailed description of a preferred, but not exclusive, embodiment of a chamber according to the invention, illustrated only by way of nonlimitative example in the accompanying drawings, wherein:
figure 1 is a schematic lateral view, partially cutout and in cross section along a vertical longitudinal plane of a cooling chamber according to the invention; and
figure 2 is a front view, in enlarged scale, of a part of the chamber.

With particular reference to the above described figures, the reference numeral 1 generally indicates the cooling chamber with overhead water sprinkler for sterile food drums 2 according to the invention.

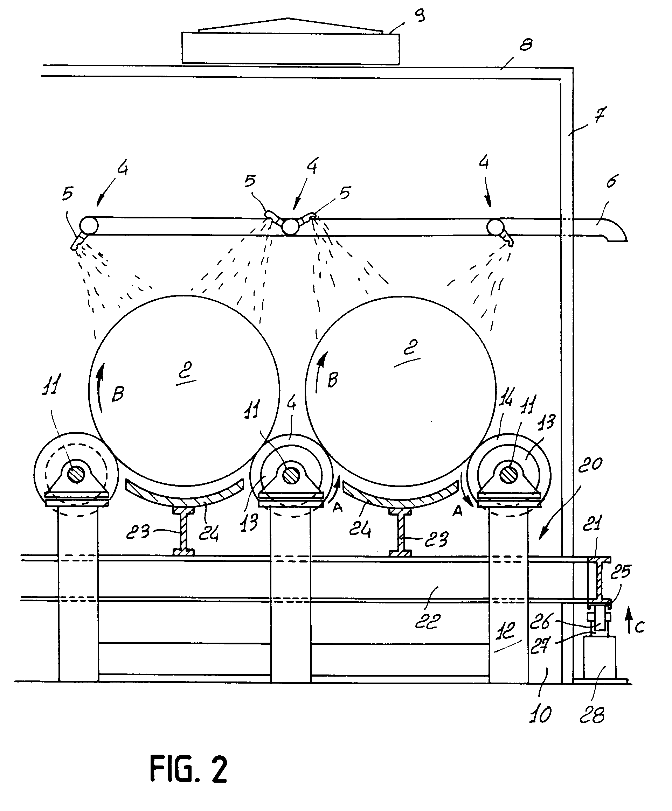

The chamber 1 comprises a compartment 3 having a rather elongated shape inside which, in the upper region, at least one line 4 of nozzles 5 for water sprinkling is arranged; in the example illustrated in figure 2, a central line 4 with two rows of nozzles, and two lateral lines 4 each having one row of nozzles, are provided, said lines being substantially constituted by longitudinal horizontal tubes fed by a transverse supply duct 6.

The compartment 3 is provided with mutually joined walls 7 and roof 8, and the roof is upwardly provided with a sort of port 9 with adjustable opening for the outflow of vapours.

A sort of tank 10 is defined below the chamber, and the cooling water is collected therein, said water being intended to be discarded or to be stored and reused after a possible cooling.

At least two longitudinal horizontal shafts 11 are rotatably supported by small spaced columns 12: pairs of rollers 13 are distributed on the shafts, and have peripheral coverings 14 in material such as rubber: at one end, the shafts 11 have sprockets 15 with 45° teeth keyed thereto coupled to corresponding sprockets 16 keyed to respective small shafts 17 rotatable with vertical axes: at the base, the shafts 17 are provided with related toothed wheels 18 which are actuated by portions of endless screw 19 rotatable about a horizontal axis transverse to the chamber and actuated by a motor assembly, not illustrated in the figure: by actuating the abovesaid motor variator, the shafts 11 are caused to rotate simultaneously, all in a same direction (for example the one indicated by arrows A, with the possibility of reversing the direction of rotation actuated from a control panel).

Each drum rests on a pair of rollers on its two sides so that is is made to rotate, for example, in the direction indicated by the arrows B: in practice rows of drums are arranged with their axes arranged on the same axis which is intermediate to and overlies the two shafts 11.

A framework 20 is provided below the shafts 11 and is constituted by side members 21 and by cross-members 22 welded to one another: for each pair of shafts 11 on the framework 20 there is welded a side member 23, having a cross section in the shape of a reclined H, and along which a plurality of curved ledges 24 is upwardly welded, their length being smaller than the interspace between the rollers 13 of each pair of rollers.

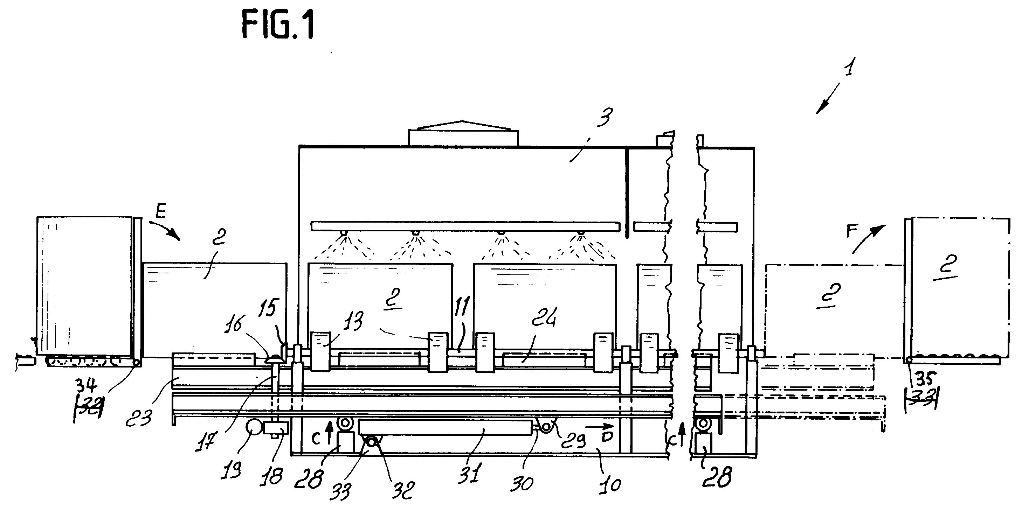

The side members 21 of the framework 20 are downwardly provided with rigidly associated profiled elements 25 in the shape of an inverted U, which act as support tracks for rollers 26 which are carried freely rotatable along axes which are horizontal and transverse with respect to the top of the stems 27 of the jacks 28; one or two flaps 29 are provided below the framework 20, and the end of the stem 30 of one or two jacks 31 is articulated to said flap or flaps, said jacks having their other end articulated, at the pivot 32, to a flap 33 fixed to the base of the compartment: by actuating the jacks 28 (arrow C) the framework is raised so that the ledges 24 move from a low position of non-interference to a raised position of support of the drums: with the subsequent actuation of the jack 31 (arrow D) all the drums are made to move forwards one step to take them to the pairs of subsequent rollers (the last drum is moved to the position illustrated in dot-and-dash line to the right in figure 1); and the subsequent lowering of the jacks 28 and backward motion of the jacks 31 causes the drums to deposit onto the rollers and returns the framework 20 to its initial configuration.

The shafts 11 extend for the entire length of the compartment 3 and for a portion substantially corresponding to the height of a drum in front of said chamber: before and after the chamber, two L-shaped drum tippers are articulated along transverse horizontal shafts 34, 35 and are adapted respectively to deposit and to take up (respectively arrows E and F) the drums before and after the chamber: the shafts 34, 35 are placed before and after the chamber by an amount corresponding to the height of a drum.

It has thus been observed that the invention achieves the intended aim and objects and in particular that it allows a single motorization to cause the rotation of the reclined drums for their effective cooling and that it allows to load and unload the drums from a reduced number of positions.

It is apparent that the speed of rotation and of step by step advancement of the drums from one pair of rollers to the successive one are set according to the type of material to be cooled, to its volume, and so on.

In practice, the materials employed, as well as the shapes and dimensions, may be any according to the requirements, without thereby abandoning the scope of the protection of the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Cooling chamber with overhead water sprinkler for sterile food drums, comprising an elongated compartment (3) inside which at least one line (4) of cooling-water spraying nozzles (5) is upwardly arranged, and a downwardly arranged tank (10) for collecting the water and at least two longitudinal shafts (11) rotatably actuated parallel to one another, rollers (13) being mounted on said shafts for supporting said drums arranged lying down one behind the other, a movable framework (20) being provided below said shafts, said framework being provided with a plurality of drum supporting ledges (24), said framework being adapted to move from a low position to a high position, for lifting each of said drums from its rollers, from said high position to an advanced high position, moving the respective drums thereon, from said advanced high position to an advanced low position, and from said advanced low position to said low position,
characterized in that each of said shafts (11) comprises a plurality of rollers (13), a roller of said rollers being of a length shorter than the length of a drum of said drums, each of said drums being supported by at least a pair of said rollers mounted on each of said shafts;
the distance between said high position and said advanced high position of one of said ledges (24) of said framework, being greater than the length of a drum of said drums; each of said ledges moving, with a respective of said drums, to the subsequent said pairs of rollers when said framework moves from said high position to said advanced high position;
said framework moving from said high position to said advanced high position and from said advanced low position to said low position according to a horizontal direction, said framework moving from said low position to said high position and from said advanced high position to said advanced low position according to a vertical direction.

2. Chamber according to claim 1, characterized in that said framework (20) is constituted by cross-members (22) and by side members (21) and in that said side members (21) are downwardly provided with tracks (25) for rollers (26) which are rotatable about horizontal axes which are transverse with respect to said chamber (1) and are carried by jacks (28) having vertical axes, and in that the forwards and backwards actuation of the framework (1) in steps corresponding to at least the height of one drum (2) are achieved by means of a jack (31) having a longitudinal horizontal axis.

3. Chamber according to claim 1, characterized in that each of said longitudinal shafts (11) is rotatably actuated by means of two sprockets (15,16) with 45° teeth, a small shaft (17) having a vertical axis, a lower toothed wheel (18) actuated by a portion of endless screw (19) and a motor variator which actuates all the mutually transversely aligned endless screws.

## Patentansprüche

1. Kühlkammer mit obenliegendem Wassersprenger für sterile Lebenmitteltrommeln, mit einer langgestreckten Kabine (3), innerhalb deren zumindest eine Leitung (4) für Kühlwassersprühdüsen (5) obenliegend angeordnet ist, und mit einem unterhalb angeordneten Tank (10) zum Sammeln des Wassers sowie zumindest zwei längsverlaufenden Wellen (11), die parallel zueinander verlaufend drehbetätigt sind, wobei Rollen (13) auf den genannten Wellen angeordnet sind, um die genannten Trommeln zu tragen, die liegend eine hinter der anderen angeordnet sind, wobei ein bewegliches Rahmengerüst (20) unterhalb der genannten Wellen vorgesehen ist, das genannte Rahmengerüst mit einer Mehrzahl von die Trommeln tragenden Leisten (24) versehen ist, das genannte Rahmengerüst so eingerichtet ist, daß es aus einer abgesenkten Stellung in eine angehobene Stellung bewegbar ist, um jede der genannten Trommeln von ihren Rollen abzuheben, von der genannten angehobenen Stellung in eine vorgeschobene angehobene Stellung bewegbar ist, um die entsprechenden Trommeln mit sich zu bewegen, und aus der genannten vorgeschobenen angehobenen Stellung in eine vorgeschobene abgesenkte Stellung und aus der genannten vorgeschobenen abgesenkten Stellung in die genannte abgesenkte Stellung bewegbar ist,
dadurch gekennzeichnet, daß jede der genannten Wellen (11) eine Mehrzahl von Rollen (13) aufweist, eine Rolle der genannten Rollen eine Länge besitzt, die kürzer ist als die Länge einer Trommel der genannten Trommeln, jede der genannten Trommeln durch zumindest ein Paar der genannten Rollen getragen ist, die an jeder der genannten Wellen angeordnet sind;
daß der Abstand zwischen der genannten angehobenen Stellung und der genannten vorgeschobenen angehobenen Stellung einer der genannten Leisten (24) des genannten Rahmengerüsts größer ist als die Länge einer Trommel der genannten Trommeln; jede der genannten Leisten sich, zusammen mit einer betreffenden der genannten Trommeln, zum nachfolgenden genannten Paar von Rollen bewegt, wenn sich das genannte Rahmengerüst von der genannten angehobenen Stellung in die genannte vorgeschobene angehobene Stellung bewegt;
daß sich das genannte Rahmengerüst von der genannten angehobenen Stellung in die genannte vorgeschobene angehobene Stellung und von der genannten vorgeschobenen abgesenkten Stellung in die genannte abgesenkte Stellung entsprechend einer horizontalen Richtung bewegt und das genannte Rahmengerüst sich von der genannten abgesenkten Stellung in die genannte angehobene Stellung und von der genannten vorgeschobenen angehobenen Stellung in die genannte vorgeschobene abgesenkte Stellung entsprechend einer vertikalen Richtung bewegt.

2. Kammer nach Anspruch 1, dadurch gekennzeichnet, daß das genannte Rahmengerüst (20) aus Querträgern (22) und Seitenteilen (21) gebildet ist und daß die genannten Seitenteile (21) unten mit Schienen (25) für Rollen (26) versehen sind, die um horizontale Achsen drehbar sind, die relativ zu der genannten Kammer (1) quer verlaufen und von Arbeitszylindern (28) mit vertikalen Achsen getragen sind, und daß die Betätigung des Rahmengerüsts in Vorwärts- und Rückwärtsrichtung in Schritten, die zumindest der Höhe einer Trommel (2) entsprechen, mittels eines Arbeitszylinders (31) bewirkt wird, der eine längsverlaufende horizontale Achse besitzt.

3. Kammer nach Anspruch 1, dadurch gekennzeichnet, daß jede der genannten längsverlaufenden Wellen (11) mittels zwei Zahnrädern (15, 16) mit 45° Verzahnung, einer kleinen Welle (17) mit vertikaler Achse und mittels eines unteren Zahnrades (18) drehbetätigt ist, das durch einen Abschnitt einer endlosen Schraubenschnecke (19) und mittels eines steuerbaren Motors angetrieben ist, der sämtliche der querliegend ausgerichteten endlosen Schraubenschnecken antreibt.

## Revendications

1. Chambre de refroidissement avec tête d'aspersion d'eau au plafond pour bidons d'aliments stériles, comprenant un compartiment (3) allongé, à l'intérieur duquel au moins une ligne (4) de gicleurs (5) d'aspersion d'eau de refroidissement est disposée vers le haut, et un réservoir (10) disposé vers le bas pour recueillir l'eau et au moins deux arbres (11) longitudinaux entraînés en rotation, parallèlement l'un à l'autre, des rouleaux (13) étant montés sur lesdits arbres pour supporter lesdits bidons disposés couchés l'un derrière l'autre, un châssis (20) mobile étant prévu en-dessous desdits arbres, ledit châssis étant pourvu d'une pluralité de corniches (24) soutenant les bidons, ledit châssis étant apte à se déplacer d'une position basse à une position haute, pour soulever chacun desdits bidons de ses rouleaux, de ladite position haute à une position haute avancée, en déplaçant les bidons correspondants sur lui, de ladite position haute avancée à une position basse avancée, et de ladite position basse avancée à ladite position basse,
caractérisée en ce que chacun desdits arbres (11) comporte une pluralité de rouleaux (13), l'un desdits rouleaux étant d'une longueur plus courte que la longueur de l'un desdits bidons, chacun desdits bidons étant soutenu par au moins une paire desdits rouleaux montée sur chacun desdits arbres,
la distance entre ladite position haute et ladite position haute avancée de l'une desdites corniches (24) dudit châssis étant plus grande que la longueur de l'un desdits bidons, chacune desdites corniches se déplaçant, avec celui desdits bidons correspondant, vers ladite paire de rouleaux suivante lorsque ledit châssis passe de ladite position haute à ladite position haute avancée et
ledit châssis passant de ladite position haute à ladite position haute avancée et de ladite position basse avancée à ladite position basse selon un sens horizontal, ledit châssis passant de ladite position basse à ladite position haute et de ladite position haute avancée à ladite position basse avancée selon un sens vertical.

2. Chambre selon la revendication 1, caractérisée en ce que ledit châssis (20) est constitué d'éléments transversaux (22) et d'éléments latéraux (21) et en ce que lesdits éléments latéraux (21) sont pourvus, vers le bas, de pistes (25) pour des rouleaux (26) qui peuvent effectuer une rotation autour d'axes qui sont horizontaux transversaux par rapport à ladite chambre (1) et sont portés par des vérins (28) ayant des axes verticaux et en ce que l'entraînement vers l'avant et l'arrière du châssis (1), en pas correspondant au moins à la hauteur d'un bidon (2), est obtenu au moyen d'un vérin (31) ayant un axe horizontal longitudinal.

3. Chambre selon la revendication 1, caractérisée en ce que chacun desdits arbres longitudinaux (11) est entraîné en rotation au moyen de deux pignons (15, 16) avec des dents à 45°, un petit arbre (17) ayant un axe vertical, une roue dentée (18) inférieure entraînée par une partie de vis sans fin (19) et un variateur de moteur qui actionne toutes les vis sans fin alignées transversalement les unes par rapport aux autres.
